# NEUE EUROPÄISCHE PATENTSCHRIFT

(11) **EP 3 078 773 B2**
(45) Veröffentlichungstag und Bekanntmachung des Hinweises auf die Entscheidung über den Einspruch: **05.04.2023**
(45) Hinweis auf die Patenterteilung: 27.06.2018
(21) Anmeldenummer: 16154116.4
(22) Anmeldetag: 07.04.2008
(51) Int. Cl.: E01C 23/088, E01C 21/00, B62D 33/063

(54) **SELBSTFAHRENDE BAUMASCHINE**
SELF-PROPELLED CONSTRUCTION VEHICLE
ENGIN DE CONSTRUCTION AUTOMOBILE

(30) Priorität: 19.04.2007 DE 202007005756 U
(43) Veröffentlichungstag der Anmeldung: 12.10.2016
(62) Teilanmeldung aus: 08154152.6
(73) Patentinhaber: Wirtgen GmbH, 53578 Windhagen (DE)
(72) Erfinder: Berning, Christian, 53909 Zèlpich (DE); Kramer, Thomas, 26160 Bad Zwischenahn (DE); Simons, Dieter, 53567 Buchholz (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 0 404 623
- EP-A1- 1 538 267
- EP-A1- 1 752 588
- EP-A2- 0 935 025
- EP-A2- 1 959 056
- EP-B2- 0 843 960
- DE-A1- 1 555 360
- DE-A1- 2 256 825
- DE-A1- 2 823 324
- DE-A1- 3 421 315
- DE-A1- 3 725 775
- DE-A1- 10 203 732
- DE-A1- 19 737 858
- DE-A1- 19 813 540
- DE-A1- 19 837 288
- DE-A1- 19 837 288
- DE-B3- 10 320 356
- DE-B4- 10 118 393
- DE-C1- 19 741 049
- DE-T2- 69 516 481
- DE-T2- 69 813 834
- DE-T5-112004 002 539
- DE-U- 1 888 085
- DE-U- 6 910 564
- DE-U1-202004 004 946
- JP-A- H08 156 663
- US-A- 4 705 256
- US-A- 5 749 783
- US-A- 6 115 651
- US-A1- 2003 085 995
- US-A1- 2005 207 841
- Anonymous: "Kaltfräse W2100 - Das Kraftpaket in der 2-m-Klasse", Wirtgen, March 2001 (2001-03),
- Claudia Fernus: "Neuentwicklungen im Kalt-und Heissrecycling Recycler und Stabilisierer WR 2000, Hochleistungsrecycler WR 4200 und Heiz- maschine HM 4500 der Wirtgen GbmH", , 2004, pages 1-8,
- Neu auf dem Markt: Der WR 2400 von Wirtgen für effiziente Bodenstabilisierung und Kaltrecycling mit allen Optionen, 14 September 2006 (2006-09-14),

## Beschreibung

Die Erfindung betrifft eine selbstfahrende Straßenfräsmaschine nach dem Oberbegriff des Anspruchs 1. Derartige Straßenfräsmaschinen sind beispielsweise aus der WO02/01005, sowie aus der US 2005/0207841 A1 bekannt. Eine derartige Straßenfräsmaschine weist einen von einem Fahrwerk getragenen Maschinenrahmen auf und hat im Wesentlichen vertikal verlaufende seitliche Außenwände. In dem Maschinenrahmen ist eine Fräswalze zum Bearbeiten einer Boden- oder Verkehrsfläche gelagert. Die Straßenfräsmaschine ist des weiteren mit einem Fahrstand mit einem Bedien- und Anzeigepult sowie einem Sitz für den Fahrzeugführer versehen. Ein Stabilisierer ist aus der DE 103 57 074 bekannt.

Die Verwendung von Kameras zur Fernsteuerung von Fräsvorrichtung zum Bearbeiten von Betonflächen, welche insbesondere für die Entsorgung und Dekontamination von Betonwänden mit einer erhöhten chemischen oder radioaktiven Belastung eingesetzt werden sind aus der DE 198 37 288 A1 bekannt.

Bei Rückwärtsfahrt muss sich der Fahrzeugführer umdrehen. Der Sitz des Fahrzeugführers ist vorzugsweise auf der sogenannten Nullseite der Straßenfräsmaschine angeordnet, an der die Fräswalze mit ihrer Stirnseite am nächsten entlang eines Hindernisses, z.B. einer Bordsteinkante oder einer Leitplanke, vorbeigeführt werden kann.

Auf der der Nullseite gegenüberliegenden Seite kann die Stirnseite der Fräswalze aufgrund der Antriebseinrichtung nicht so nah an einem Hindernis vorbeigeführt werden.

Der Fahrzeugführer kann von seinem auf der Nullseite angeordnetem Sitz aus die der Nullseite gegenüberliegende Außenkante der Maschine mit Hilfe von Außenspiegeln beobachten.

Aufgrund der eingeschränkten Sicht und Beobachtungsmöglichkeiten ist der Fahrzeugführer auf einen begleitenden Helfer angewiesen, der ihn insbesondere im Rangierbetrieb und im Fräsbetrieb unterstützt. Insbesondere im Fräsbetrieb ergeben sich dann allerdings sehr lange Zeitperioden, in denen der Helfer nicht beschäftigt ist.

Der Erfindung liegt daher die Aufgabe zugrunde eine Baumaschine der eingangs genannten Art derart weiterzubilden, dass die Sichtverhältnisse für den Fahrzeugführer verbessert werden, so dass der Betrieb einer Baumaschine sowohl im Rangierbetrieb als auch im Arbeitsbetrieb ohne weitere Hilfspersonen möglich ist.

Zur Lösung dieser Aufgabe dienen die Merkmale des Anspruchs 1. Die Erfindung sieht vor, dass an mehreren Stellen der Straßenfräsmaschine Videoüberwachungseinrichtungen zum Überwachen des Materialauswurfs von der Transporteinrichtung auf ein Transportfahrzeug und/oder zum Überwachen des Bereichs vor der Fräswalze vorgesehen sind, wobei die Höhe der Sitzfläche des Sitzes derart einstellbar ist, dass die Augenhöhe im Sitzen im Wesentlichen der Augenhöhe des Fahrzeugführers im Stehen entspricht. Auf diese Weise ist gewährleistet, dass der Fahrzeugführer auch im Sitzen die gleiche Übersicht über das Fahrzeug - wie im Stehen - besitzt.

Der Sitz des Fahrzeugführers ist erfindungsgemäß innerhalb des Fahrerstandes und unabhängig von dem Fahrerstand drehbar, so dass auch der Rückfahrbetrieb für den Fahrzeugführer erleichtert ist. Vorzugsweise ist ein Drehwinkel von 180° ausreichend, wobei auch ein größerer Drehwinkel vorteilhaft sein kann. Nach einem bevorzugten Ausführungsbeispiel ist die Höhe der Standflache im Fahrerstand derart einstellbar, dass die Augenhöhe im Sitzen im Wesentlichen der Augenhöhe des Fahrzeugführers im Stehen entspricht. Es ist vorgesehen, dass der Fahrerstand quer zur Fahrtrichtung verfahrbar ist, und dass der Sitz für den Fahrzeugführer in den Fahrerstand integriert ist, der über die seitlichen Außenwände des Maschinenrahmens hinaus nach Außen verfahrbar ist, wobei der Maschinenrahmen eine quer zur Fahrtrichtung wirkende Führung für den Fahrerstand aufweist. Die Führung kann nicht oder nur geringfügig über die seitlichen Außenwände überstehen. Der Fahrerstand ist nur teilweise über die seitlichen Außenwände hinaus verfahrbar, wobei es genügt, dass der Fahrzeugführer in dem Fahrerstand die seitliche Außenwand und den Bereich neben der Außenwand beobachten kann. In einer bevorzugten Ausführung der Erfindung kann der Fahrzeugführer mit seinem Sitz über die seitlichen Außenwände hinaus auf beiden Seiten der Baumaschine herausfahren, so dass er die Außenseiten der Maschine im Rangier- und Fräsbetrieb optimal beobachten kann. Auch im Falle eines Hindernisses z.B. einer Straßenlaterne kann der Fahrzeugführer seinen Fahrerstand kurzfristig nach innen verschieben, bis die Baumaschine das Hindernis passiert hat.

Der Fahrerstand kann zumindest in den äußeren Endpositionen der mindestens einen Führung jenseits der seitlichen Außenwände um eine vertikale Achse schwenkbar sein. Auf diese Weise kann der Fahrzeugführer in eine für die Beobachtung des Rangier- und Fräsbetriebs der Maschine optimale Position gebracht werden.

Vorzugsweise ist das Bedien- und Anzeigepult in den verfahrbaren Fahrerstand integriert. Auf diese Weise muss der Fahrzeugführer seinen Sitz zum Bedienen der Maschine, oder zum Ablesen von Anzeigeinstrumenten nicht verlassen.

Nach einer vorteilhaften Weiterbildung ist vorgesehen, dass eine an den verfahrbaren Fahrerstand befestigte Säule das Bedien- und Anzeigepult in einem einstellbaren Abstand von dem Fahrzeugführer trägt. Auf diese Weise kann das Bedien- und Anzeigepult ergonomisch an den jeweiligen Fahrzeugführer angepasst werden.

Der Sitz weist Armlehnen auf, wobei Bedienelemente für die Maschinensteuerung in Verlängerung einer Armlehne des Sitzes angeordnet sein können.

Der Fahrerstand ist vorzugsweise von einer Wetterschutzeinrichtung umgeben, die gemeinsam mit dem Fahrerstand verfahrbar ist.

Dabei kann die Wetterschutzeinrichtung aus einer Kabine bestehen.

Die Kabine ist zum Transport vorzugsweise zusammenfaltbar oder versenkbar oder umklappbar, damit die maximale Transportabmessung der Straßenfräsmaschine bei einem Transport auf einem Tieflader für Brückenunterführungen gering gehalten werden kann. Die Kabine ist beispielsweise um eine parallel zur Fahrtrichtung verlaufende Achse umklappbar, wenn ihre Breite quer zur Fahrtrichtung erheblich schmaler als ihre Höhe ist.

Das Bedien- und Anzeigepult weist Steuerungs-, Bedien- und Anzeigelemente für den Fahr- und Rangierbetrieb, den Fräsbetrieb und die Überwachung des Fräsbetriebes auf.

An den seitlichen Außenwänden können Aufstiegshilfen für den Fahrzeugführer angeordnet sein, die zur Verringerung des Mindestabstandes der Straßenfräsmaschine von Hindernissen automatisch in eine Position verschwenkbar sind, in der sie eng an der Außenwand anliegen. Diese Aufstiegshilfen, z.B. Leitern mit Geländern, können elektrisch oder hydraulisch fernbedienbar ohne manuelle Betätigung oder Hilfestellung durch Hilfspersonen an die Außenwand der Straßenfräsmaschine angelegt werden, so dass die Straßenfräsmaschine insbesondere auf der Nullseite möglichst nah an Hindernisse herangeführt werden kann.

Des weiteren können schwenkbare Spiegel vorgesehen sein, die zur Verringerung des Mindestabstandes der Straßenfräsmaschine von Hindernissen automatisch in eine Position schwenkbar sind, in der sie nicht oder nur geringfügig über die Außenwand seitlich überstehen.

Der Fahrerstand kann eine vertikale Schwenkachse aufweisen, die zwischen dem Sitz und dem Bedien- und Anzeigepult, vorzugsweise mittig zwischen dem Sitz und dem Bedien- und Anzeigepult verläuft. Auf diese Weise führt der Sitz des Fahrzeugführers eine Schwenkbewegung um diese vorzugsweise orthogonal zu dem Maschinenrahmen verlaufende vertikale Schwenkachse aus.

Vorzugsweise ist die Schwenkbewegung um die vertikale Schwenkachse des Fahrerstandes erst in den äußeren Endpositionen der Sitzeinheit an den Enden der Schienenführung freigegeben.

Dabei kann vorgesehen sein, dass der Sitz für den Fahrzeugführer in den äußeren Endpositionen des Fahrerstandes an den Enden der Schienenführung automatisch nach außen verschwenkbar ist. Dies bedeutet, dass der Fahrzeugführer keine Bedien- oder Steuerelemente betätigen muss, um in eine optimale Sitzposition zur Beobachtung der zu bearbeitenden Straßenoberfläche, des Lenkeinschlags, eines Peilstabes und der Markierungen auf der Straßenoberfläche zu gelangen.

Der Sitz oder der Fahrerstand und/oder die Kabine können für den Fahr- und Rangierbetrieb in eine angehobene Position anhebbar sein.

Im Folgenden werden unter Bezugnahme auf die Zeichnungen Ausführungsbeispiele der Erfindung näher erläutert. Es zeigen:
- Fig. 1: eine Straßenfräsmaschine,
- Fig. 2: eine Draufsicht auf die Straßenfräsmaschine der Fig. 1,
- Fig. 3: eine weitere Draufsicht auf die Straßenfräsmaschine der Fig. 1,

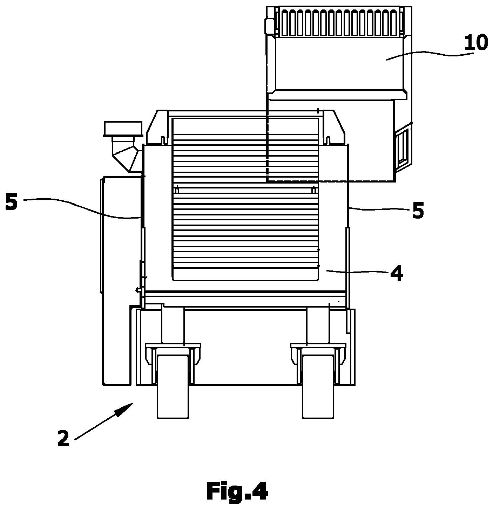

- Fig. 4: eine Rückansicht der Straßenfräsmaschine der Fig. 1,

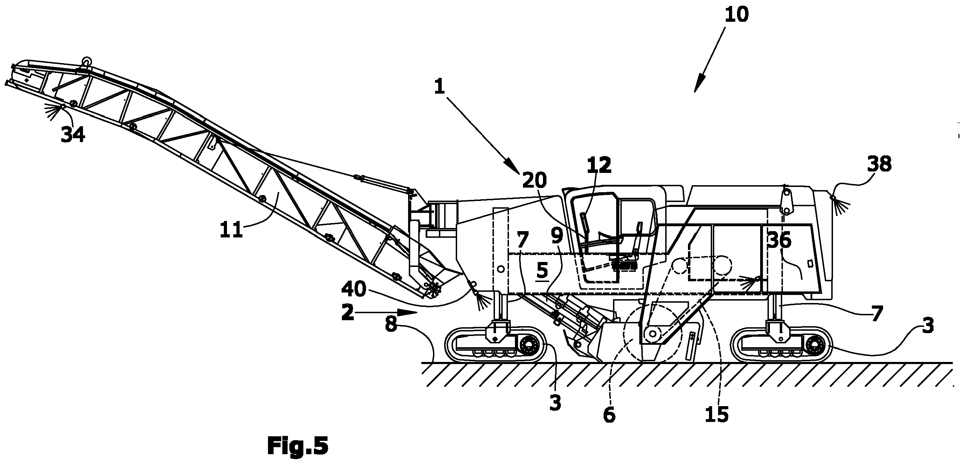

- Fig. 5: eine Seitenansicht der Straßenfräsmaschine, bei der die Kabine des Fahrstandes in Transportstellung ist,

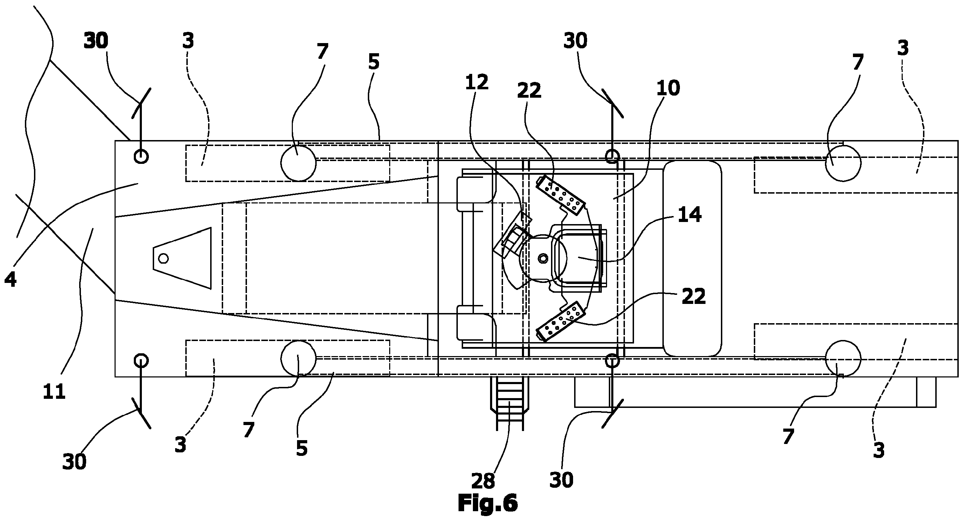

- Fig. 6: eine Draufsicht auf die Straßenfräsmaschine gemäß Fig. 5, bei der sich die Kabine in Transportstellung befindet,
- Fign. 7 und 8: eine perspektivische Ansicht eines nicht zur Erfindung gehörenden Stabilisierers, und
- Fign. 9 und 10: einen Schwenkrahmen des Maschinenrahmens des nicht zur Erfindung gehörenden Stabilisierers gemäß Fign. 7 und 8.

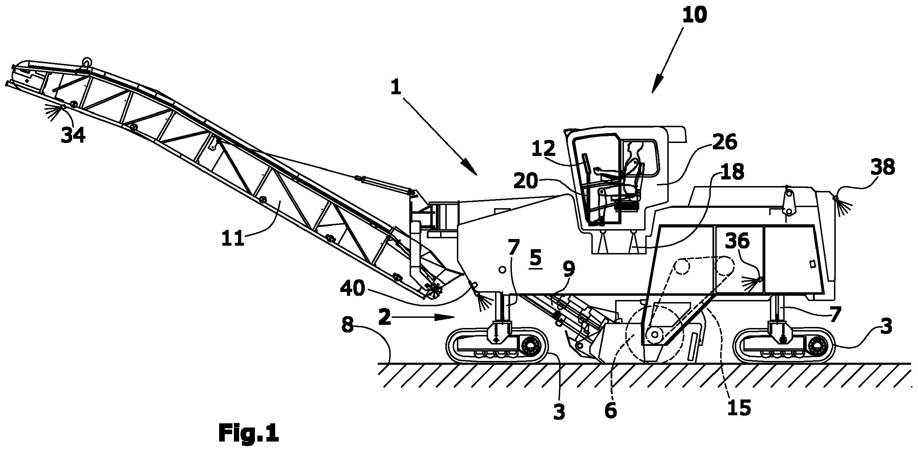

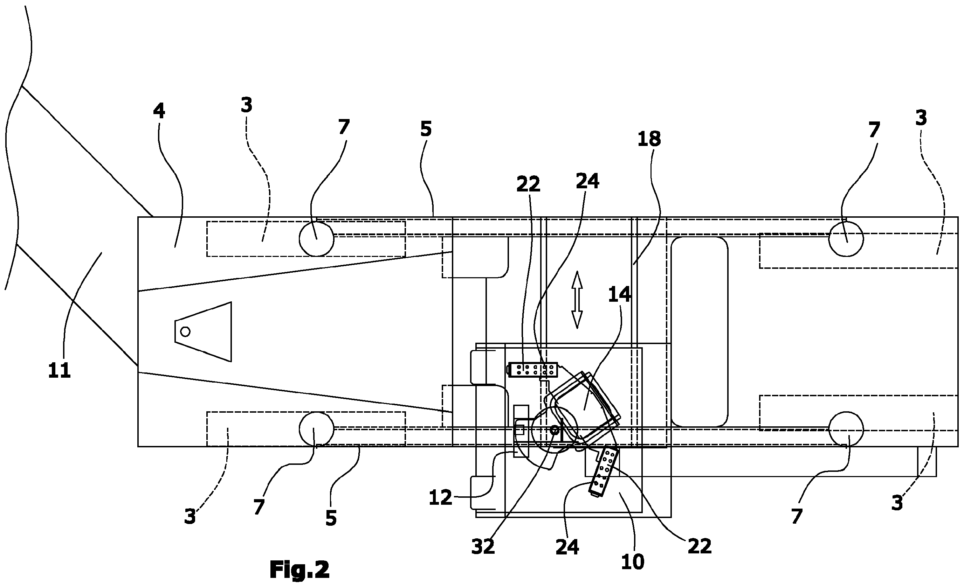

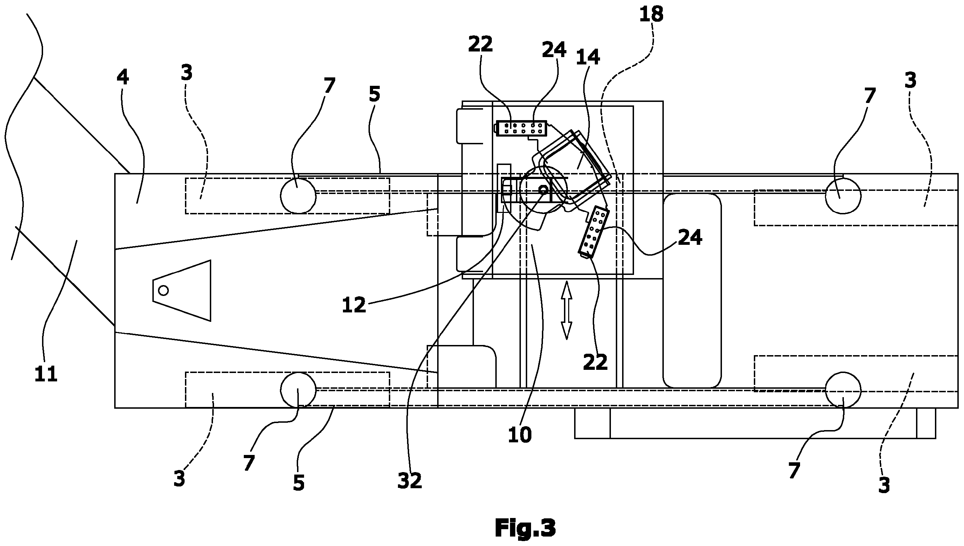

Fig. 1 zeigt eine Straßenfräsmaschine 1 zum Fräsen von Boden- oder Verkehrsflächen 8 in der Ausführungsform einer Frontladerstraßenfräse. Die Straßenfräsmaschine 1 weist ein Fahrwerk 2 auf mit beispielsweise vier Kettenlaufwerken 3, das dem Maschinenrahmen 4 der Straßenfräsmaschine 1 trägt. Es versteht sich, dass die Kettenlaufwerke 3 durch Räderlaufwerke ganz oder teilweise substituiert werden können. In dem Maschinenrahmen 4 ist eine Fräswalze 6 gelagert, die sich quer zur Fahrtrichtung erstreckt. Die Einstellung der Frästiefe erfolgt vorzugsweise mit Hilfe der Höhenverstellung der Kettenlaufwerke 3 über Hubsäulen 7. Die in Fig. 1 dargestellte Straßenfräsmaschine 1 wird auch als FrontladerStraßenfräse bezeichnet, da sie das abgefräste Material in Fahrtrichtung nach vorne auf ein Transportfahrzeug befördern kann. In Fahrtrichtung vor der Fräswalze 6 ist eine erste, aus einem Transportband bestehende Transporteinrichtung 9 angeordnet, die das abgefräste Material vorzugsweise zu einer zweiten, aus einem Transportband bestehende Transporteinrichtung 11 überträgt. Es versteht sich, dass die Straßenfräsmaschine 1 auch nur ein einziges Transportband aufweisen kann. Der Maschinenrahmen 4 weist im wesentlichen vertikal verlaufende seitliche Außenwände 5 auf. Auf der Oberseite des Maschinenrahmens ist ein Fahrerstand 10 mit einem Bedien- und Anzeigepult 12 und einem Sitz 14 für den Fahrzeugführer angeordnet. Der Sitz 14 und das Bedien- und Anzeigepult 12 sind in dem quer zur Fahrtrichtung verfahrbaren Fahrstand 10 integriert. Der Fahrerstand 10 kann auf einer mit dem Maschinenrahmen 4 verbundenen Führung 18, vorzugsweise eine Schienenführung, über die seitlichen Außenwände 5 des Maschinenrahmens 4 hinaus nach außen verfahren werden. Die Schienenführung 18 steht vorzugsweise nicht über die Außenwände 5 seitlich über, wobei gleichwohl der Fahrerstand 10, wie am besten aus den Fign. 2 und 3 ersichtlich, nahezu bis zu seiner Mitte über die seitlichen Außenwände 5 hinaus verfahrbar ist.

Die Führung 18 kann in einer horizontalen Ebene im wesentlichen quer zur Fahrtrichtung linear oder leicht bogenförmig verlaufen oder aus einer Parallelführung bestehen, bei der der Fahrerstand parallel verschoben wird.

Der Sitz 14 für den Fahrzeugführer ist drehbar. Dabei ist vorzugsweise vorgesehen, dass der Sitz 14 gemeinsam mit einem Bedien- und Anzeigepult 12 um eine vertikale Achse 32 innerhalb des Fahrerstandes 10 schwenkbar ist.

Das in dem verfahrbaren Fahrerstand 10 integrierte Bedien- und Anzeigepult 12 ist hierzu an einer Säule 20 in einem einstellbaren Abstand von dem Fahrzeugführer befestigt und ist um die vertikale Achse 32 mit dem Sitz 14 oder unabhängig von diesem verschwenkbar.

Der Sitz 14 ist hinsichtlich seiner Sitzfläche derart höhenverstellbar, dass die Augenhöhe des Fahrzeugführers im Sitzen im wesentlichen der Augenhöhe im Stehen innerhalb des Fahrerstandes 10 entspricht.

Der Sitz 14 kann Armlehnen 22 aufweisen, die mit den Bedienelementen 24 für die Maschinensteuerung versehen sind.

Der Fahrerstand 10 ist von einer Kabine 26 als Wetterschutzeinrichtung umgeben. In der mittleren Stellung der Kabine 26 zwischen den Außenwänden 5 ist die Kabine relativ zu dem Maschinenrahmen 4 absenkbar, derart, dass die Oberkante der Kabine 26 mit den vor und hinter der Kabine 26 angeordneten, am Maschinenrahmen 4 befestigten Maschinenelementen bündig abschließt. Dadurch befindet sich die Kabine 26 in einer Transportstellung, um die Aufbauhöhe bei einem Transport der Straßenfräsmaschine 1 auf einem Tieflader gering zu halten.

Alternativ kann die Kabine zusammenfaltbar sein oder um eine horizontale, parallel zur Fahrtrichtung verlaufende Achse schwenkbar sein, wenn die Kabine 26 im Vergleich zu ihrer Höhe schmal ist.

An den seitlichen Außenwänden 5 können Aufstiegshilfen 28 in Form von Leitern mit Handläufen angeordnet sein, die, wenn sich der Fahrzeugführer in dem Fahrerstand 10 befindet, mit Hilfe von Antrieben in Richtung auf die Außenwand 5 verschwenkt werden können, so dass diese möglichst flach an der Außenwand 5 anliegen. Die Aufstiegshilfen sind vorzugsweise auf der der Nullseite der Straßenfräsmaschine 1 entgegengesetzten Seite angeordnet, an der auch der Riementrieb 15 für die Fräswalze 6 angeordnet ist.

Es versteht sich allerdings, dass die Aufstiegshilfen auch auf der Nullseite der Straßenfräsmaschine 1 angeordnet sein können. Die Nullseite der Maschine ist diejenige Seite, auf der die Stirnseite der Fräswalze 6 sehr nah an der Außenwand 5 endet und auf der sich nicht der Riementrieb 15 befindet, so dass auf der Nullseite der Maschine ein kantennahes oder hindernisnahes Fräsen möglich ist.

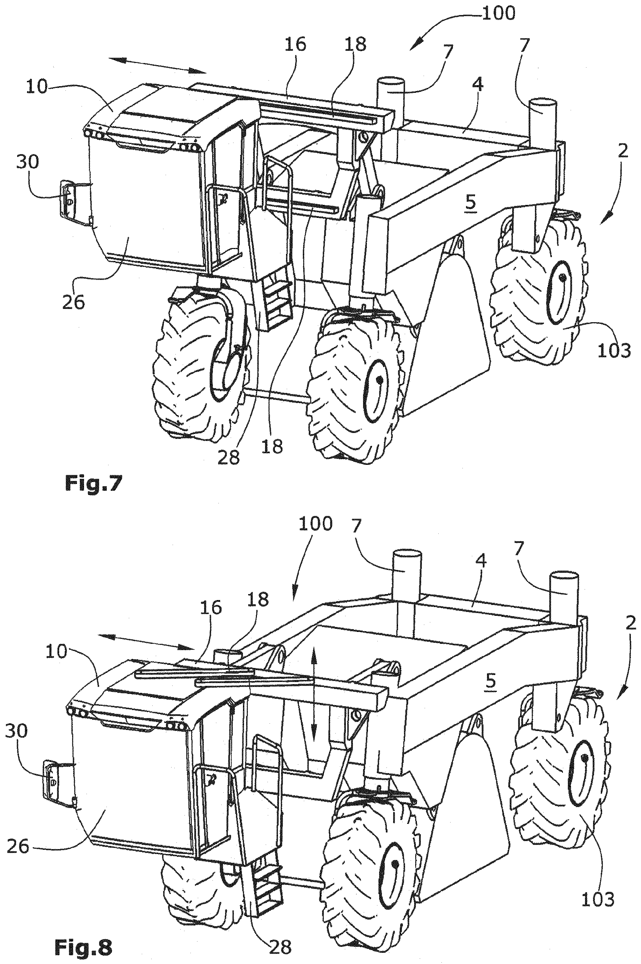

Die Fign. 7 bis 10 zeigen einen nicht zur Erfindung gehörenden Bodenstabilisierer/Recycler 100. Der Maschinenrahmen 4 kann über Hubsäulen von einem Fahrwerk 2 getragen werden, das vorzugsweise Räder 103 aufweist. Der Fahrerstand 10 befindet sich bei einer derartigen Baumaschine vor dem Maschinenrahmen 4 und auch vor dem Fahrwerk 2. In den Fign. 7 und 8 ist der von einer Kabine 26 umgebene Fahrerstand 10 ersichtlich, der über einen Schwenkrahmen 16 des Maschinenrahmens 4 mit dem Maschinenrahmen 4 verbunden ist. Der in Fahrtrichtung vordere Teil des Schwenkrahmens 16 bildet dabei zugleich die Führung 18 für die quer zur Fahrtrichtung verfahrbare Kabine 26.

An der Kabine 26 kann eine Aufstiegshilfe 28 befestigt sein.

Die Fig. 7 zeigt den Schwenkrahmen 16 des Maschinenrahmens 4, der über Lenker 102,104 parallelogrammartig mit dem Maschinenrahmen 4 verbunden ist.

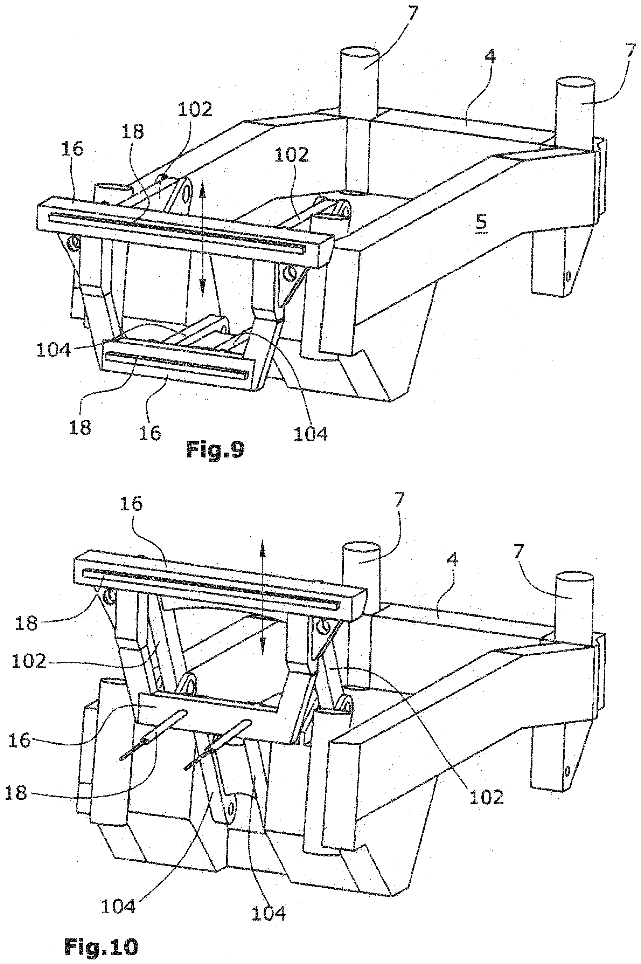

Aufgrund der parallelogrammartigen Anlenkung des Schwenkrahmens 16 ist es möglich, den Fahrerstand 10 von einer unteren Position zu einer oberen Position und zurück parallel zu verschieben, ohne dass die Neigung der Kabine 26 zu einer vertikalen, quer zur Fahrtrichtung verlaufenden Ebene verändert wird. Die Neigung kann aber auch durch geeignete Gestaltung der parallelogrammartigen Anlenkung oder durch Zusatzeinrichtungen 108 in Längsneigung und/oder Querneigung einstellbar sein (Fig. 10).

Auf dem Schwenkrahmen 16 können bodenparallele, lineare oder in einer Horizontalebene bogenförmig verlaufende Führungen 18 an den oberen und/oder unteren Querbalken des Schwenkarms 16 vorgesehen sein, die ein seitliches Verschieben des Fahrerstandes 10 quer zur Fahrtrichtung ermöglichen. Die Fig. 7 zeigt eine maximale Außenposition des Fahrerstandes 10, bei der die angehobene Kabine 26 gegenüber der einen seitlichen Außenwand 5 übersteht.

Fig. 8 zeigt eine alternative Führung 18 mit parallelogrammartig angeordneten Lenkern 110 und einer abgesenkten Kabine 26.

Der obere Querbalken des Schwenkrahmens 16 erstreckt sich über die gesamte Breite des Maschinenrahmens 4 und kann auch in Höhenrichtung über das Dach der Kabine 26 nach oben überstehen.

Der Schwenkrahmen 16 kann als Überrollschutz dienen (Roll Over Protective Structure, ROPS).

An den Außenseiten der Baumaschinen, insbesondere an den Außenwänden 5 können mehrere schwenkbare Spiegel 32 angeordnet sein, die mit Hilfe von Antriebseinrichtungen von dem Fahrzeugführer bedient werden können, so dass keine zusätzlichen Personen für diese Tätigkeiten notwendig sind.

Die Kabine 26 kann für den Rangierbetrieb oder den Arbeitsbetrieb in eine besonders angehobene Position verfahren werden.

Schließlich sind an mehreren Stellen der Baumaschine 1 Videoüberwachungseinrichtungen angeordnet. Am vorderen Ende der Transporteinrichtung 11 der in Fig. 2 gezeigten Baumaschine 1 befindet sich eine Videokamera 34 zum Überwachen des Materialauswurfs von dem vorderen Transportband 11 auf ein Transportmittel, z.B. einen Lastkraftwagen.

Am hinteren Ende der Baumaschine 1 kann eine Videokamera 38 zum Überwachen des rückwärtigen Bereichs vorgesehen sein. An den Außenwänden 5 können Videokameras 36 angeordnet sein, die die Beobachtung der linken bzw. rechten Maschinenseite in Vorwärtsrichtung längs den Außenwänden 5 erlauben. An der Unterseite des Maschinenrahmens 4 kann am vorderen Ende des Maschinenrahmens 4 eine Videokamera 40 angeordnet sein, die den Bereich vor der Fräswalze 6 der Baumaschine beobachten kann.

Im Resultat können die beschriebenen Baumaschinen von einem Fahrzeugführer ohne Hilfsperson bedient werden, da der Fahrzeugführer alle Maschinenfunktionen ausüben kann, ohne auf die Hilfe einer Hilfsperson angewiesen zu sein und ohne den Fahrerstand 10 verlassen zu müssen. Aufgrund der Videoüberwachung mit Hilfe der Videokameras 34 bis 40 und der Anzeige der Bilder auf dem Bedien- und Anzeigepult 12 kann auch der Materialtransport auf einen LKW im Falle einer Straßenfräsmaschine und der Rangierbetrieb beim Auffahren der Baumaschine 1 auf einen Tieflader von dem Fahrzeugführer ohne Hilfsperson durchgeführt werden.

## Patentansprüche

1. Selbstfahrende Straßenfräsmaschine (1), mit
- einem von einem Fahrwerk (2) mit vier Kettenlaufwerken (3) getragenen Maschinenrahmen (4) mit seitlichen Außenwänden (5),
- einer in dem Maschinenrahmen (4) quer zur Fahrtrichtung zwischen den vorderen und hinteren Kettenlaufwerken (3) gelagerten Fräswalze (6) zum Bearbeiten einer Boden- oder Verkehrsfläche (8),
- einer in Fahrtrichtung vor der Fräswalze (6) angeordneten, aus einem Transportband bestehenden Transporteinrichtung (11) für den Materialtransport des abgefrästen Materials in Fahrtrichtung nach vorne auf ein Transportfahrzeug und
- mit einem Fahrerstand (10) mit einem Bedien- und Anzeigepult (12) und einem Sitz (14) für einen Fahrzeugführer auf der Oberseite des Maschinenrahmens (4) zwischen den vorderen und hinteren Kettenlaufwerken,
**dadurch gekennzeichnet,**
**dass** der Fahrerstand quer zur Fahrtrichtung auf dem Maschinenrahmen verfahrbar ist,
**dass** der Sitz (14) für den Fahrzeugführer in den Fahrerstand (10) integriert ist, der über die seitlichen Außenwände (5) des Maschinenrahmens (4) hinaus nach außen verfahrbar ist,
**dass** der Maschinenrahmen (4) eine quer zur Fahrtrichtung wirkende Führung (18) für den Fahrerstand (10) aufweist, und
**dass** an mehreren Stellen der Straßenfräsmaschine (1) Videoüberwachungseinrichtungen (34, 36, 38, 40) zum Überwachen des Materialauswurfs von der Transporteinrichtung (11) auf ein Transportfahrzeug und/oder zum Überwachen des Bereichs vor der Fräswalze (6) vorgesehen sind, wobei die Höhe der Sitzfläche des Sitzes (14) derart einstellbar ist, dass die Augenhöhe im Sitzen im Wesentlichen der Augenhöhe des Fahrzeugführers im Stehen entspricht und/oder der Sitz (14) innerhalb des Fahrerstandes (10) und unabhängig von dem Fahrerstand (10) drehbar ist.

2. Selbstfahrende Straßenfräsmaschine nach Anspruch 1, **dadurch gekennzeichnet, dass** der Fahrerstand (10) ein Bedien- und Anzeigepult (12) mit Anzeigeelementen aufweist, die Bilder der Videoüberwachungseinrichtungen (34, 36, 38, 40) für die Überwachung des Fräsbetriebes anzeigen.

3. Straßenfräsmaschine nach Anspruch 1 oder 2, **dadurch gekennzeichnet, dass** mit Hilfe der Videoüberwachungseinrichtungen (34, 36, 38, 40) der Materialtransport auf das Transportmittel z.B. einen Lastkraftwagen überwachbar ist.

4. Selbstfahrende Straßenfräsmaschine nach einem der Ansprüche 1 bis 3, **dadurch gekennzeichnet, dass** über die Videoüberwachung mit Hilfe der Anzeige der Bilder der Videoüberwachungseinrichtungen (34, 36, 38, 40) auf dem Bedien- und Anzeigepult (12) der Materialtransport auf das Transportmittel, z.B. einen Lastkraftwagen überwachbar ist.

5. Selbstfahrende Straßenfräsmaschine nach Anspruch 1 oder 2, **dadurch gekennzeichnet, dass** die Videoüberwachungseinrichtungen am vorderen Ende der Transporteinrichtung (11) eine Videokamera (34) zum Überwachen des Materialauswurfs von dem vorderen Ende der Transporteinrichtung (11) auf das Transportfahrzeug, z. B. einen Lastkraftwagen (LKW), aufweisen.

6. Selbstfahrende Straßenfräsmaschine nach einem der Ansprüche 1 bis 3, **dadurch gekennzeichnet, dass** die Videoüberwachungseinrichtungen (34, 36, 38, 40) am vorderen Ende des Maschinenrahmens (4) eine Videokamera (40) an der Unterseite des Maschinenrahmens (4) zum Überwachen des Bereichs in Fahrtrichtung vor der Fräswalze (6) aufweisen.

7. Selbstfahrende Straßenfräsmaschine nach einem der Ansprüche 1 bis 4, **dadurch gekennzeichnet, dass** die Videoüberwachungseinrichtungen (34, 36, 38, 40) eine Videokamera (38) am hinteren Ende der Straßenfräsmaschine zum Überwachen des rückwärtigen Bereichs aufweisen.

8. Selbstfahrende Straßenfräsmaschine nach einem der Ansprüche 1 bis 5, **dadurch gekennzeichnet, dass** die Videoüberwachungseinrichtungen (34, 36, 38, 40) an den Außenwänden (5) der Straßenfräsmaschine Videokameras (36) zum Überwachen des Bereichs neben den Außenwänden (5) aufweisen.

## Claims

1. A self-propelled road milling machine (1), having
- a machine frame (4), with lateral outer walls (5), carried by a chassis (2) having four continuous tracks (3),
- a milling drum (6) mounted in the machine frame (4) transversely to the driving direction between the front and the rear continuous tracks (3) for working a ground surface or traffic surface (8),
- a transport means (11) arranged in front of the milling drum (6) in the driving direction and made up of a transport belt for the material transport of the milled-off material forwards in the driving direction onto a transport vehicle, and
- an operator's platform (10) with an operating and indicating panel (12) and a seat (14) for a machine driver on an upper side of the machine frame (4) between the front and the rear continuous tracks,
**characterized in that**
the operator's platform is moveable transversely to the direction of travel on the machine frame,
the seat (14) for the machine driver is integrated into the operator's platform (10), which is moveable outwards beyond the lateral outer walls (5) of the machine frame (4),
the machine frame (4) being provided with a guide (18) for the operator's platform (10) acting transversely to the direction of travel,
at a plurality of places of the road milling machine (1) video monitoring means (34, 36, 38, 40) for monitoring the material discharge from the transport means (11) onto a transport vehicle and/or for monitoring the area in front of the milling drum (6) are provided, wherein the height of the seating surface of the seat (14) is adapted to be adjusted such that the eye level, when seating, essentially corresponds to the eye level of the operator when standing and/or the seat (14) is adapted to be swivelled inside the operator's platform (10) and independent of the operator's platform (10).

2. The self-propelled road milling machine according to claim 1, **characterized in that** the operator's platform (10) comprises an operating and indicating panel (12) having indicator elements which display pictures of the video monitoring means (34, 36, 38, 40) for monitoring the milling operation.

3. The self-propelled road milling machine according claim 1 or 2, **characterized in that** with the aid of the video monitoring means (34, 36, 38, 40) the material transport onto the transport means, e. g. a lorry, is adapted to be monitored.

4. The self-propelled road milling machine according to any one of claims 1 to 3, **characterized in that** via the video monitoring with the aid of the displayed pictures of the video monitoring means (34, 36, 38, 40) on the operating and indicating panel (12) the material transport onto the transport means, e. g. a lorry, is adapted to be monitored.

5. The self-propelled road milling machine according to claim 1 or 2, **characterized in that** the video monitoring means comprise a video camera (34) at the front end of the transport means (11) for monitoring the material discharge from the front end of the transport means (11) onto a transport vehicle, e. g. a lorry.

6. The self-propelled road milling machine according to any one of claims 1 to 3, **characterized in that** the video monitoring means (34, 36, 38, 40) at the front end of the machine frame (4) comprise a video camera (40) on the lower side of the machine frame (4) for monitoring the area in front of the milling drum (6) in the driving direction.

7. The self-propelled road milling machine according to any one of claims 1 to 4, **characterized in that** the video monitoring means (34, 36, 38, 40) comprise a video camera (38) at the rear end of the road milling machine for monitoring the rear area.

8. The self-propelled road milling machine according to any one of claims 1 to 5, **characterized in that** the video monitoring means (34, 36, 38, 40) at the outer walls (5) of the road milling machine comprise video cameras (36) for monitoring the area next to the outer walls (5).

## Revendications

1. Fraiseuse routière automotrice (1), dotée
- d'un châssis de machine (4) doté de parois externes latérales (5) et porté par un train de roulement (2) doté de quatre chenilles (3),
- d'un rouleau fraiseur (6) disposé dans le châssis de machine (4) transversalement à la direction de déplacement entre les chenilles (3) avant et arrière, destiné à traiter une chaussée ou une surface de circulation (8),
- d'un dispositif transporteur (11) constitué d'une bande convoyeuse et disposé devant le rouleau fraiseur (6) dans la direction de déplacement afin de convoyer les matières fraisées vers l'avant dans la direction de déplacement sur un véhicule transporteur et
- dotée d'un poste de conduite (10) doté d'un pupitre de commande et d'affichage (12) et doté d'un siège (14) pour un conducteur de véhicule sur la face supérieure du châssis de machine (4) entre les chenilles avant et arrière,
**caractérisée**
**en ce que** le poste de conduite peut être déplacé sur le châssis de machine transversalement au châssis de machine,
**en ce que** le siège (14) pour le conducteur de véhicule est intégré dans le poste de conduite (10) qui peut être déplacé vers l'extérieur au-delà des parois externes latérales (5) du châssis de machine (4),
**en ce que** le châssis de machine (4) comporte un guidage (18) opérant transversalement à la direction de déplacement pour le poste de conduite (10), et
**en ce qu'**à plusieurs endroits de la fraiseuse routière (1) sont prévus des dispositifs de vidéosurveillance (34, 36, 38, 40) destinés à surveiller l'éjection des matières sur un véhicule transporteur par le dispositif transporteur (11) et/ou à surveiller la zone devant le rouleau fraiseur (6), dans laquelle la hauteur de la surface d'assise du siège (14) est réglable de telle sorte que la hauteur des yeux en position assise correspond à la hauteur des yeux du conducteur de véhicule en position debout et/ou le siège (14) peut tourner à l'intérieur du poste de conduite (10) et indépendamment du poste de conduite (10).

2. Fraiseuse routière automotrice selon la revendication 1, **caractérisée en ce que** le poste de conduite (10) comporte un pupitre de commande et d'affichage (12) doté d'éléments d'affichage, lesquels affichent des images des dispositifs de vidéosurveillance (34, 36, 38, 40) pour surveiller le fonctionnement de la fraise.

3. Fraiseuse routière automotrice selon la revendication 1 ou 2, **caractérisée en ce qu'**à l'aide des dispositifs de vidéosurveillance (34, 36, 38, 40), le transport des matières sur le moyen de transport, par exemple un camion poids lourd, peut être surveillé.

4. Fraiseuse routière automotrice selon l'une des revendications 1 à 3, **caractérisée en ce que** par le biais de la vidéosurveillance à l'aide de l'affichage des images des dispositifs de vidéosurveillance (34, 36, 38, 40) sur le pupitre de commande et d'affichage (12), le transport des matières sur le moyen de transport, par exemple un camion poids lourd, peut être surveillé.

5. Fraiseuse routière automotrice selon la revendication 1 ou 2, **caractérisée en ce que** les dispositifs de vidéosurveillance à l'extrémité avant du dispositif transporteur (11) comportent une caméra vidéo (34) destinée à surveiller l'éjection des matières sur le véhicule transporteur, par exemple un camion poids lourd, par l'extrémité avant du dispositif transporteur (11).

6. Fraiseuse routière automotrice selon l'une des revendications 1 à 3, **caractérisée en ce que** les dispositifs de vidéosurveillance (34, 36, 38, 40) à l'extrémité avant du châssis de machine (4) comportent une caméra vidéo (40) sur la face inférieure du châssis de machine (4) destinée à surveiller la zone en avant du rouleau fraiseur (6) dans la direction de déplacement.

7. Fraiseuse routière automotrice selon l'une des revendications 1 à 4, **caractérisée en ce que** les dispositifs de vidéosurveillance (34, 36, 38, 40) comportent une caméra vidéo (38) à l'extrémité arrière de la fraiseuse routière, destinée à surveiller la zone arrière.

8. Fraiseuse routière automotrice selon l'une des revendications 1 à 5, **caractérisée en ce que** les dispositifs de vidéosurveillance (34, 36, 38, 40) sur les parois externes (5) de la fraiseuse routière comportent des caméras vidéo (36) destinées à surveiller la zone adjacente aux parois externes (5).
